# FASCICULE DE BREVET EUROPEEN

(11) **EP 4 121 574 B1**
(45) Date de publication et mention de la délivrance du brevet: **14.02.2024**
(21) Numéro de dépôt: 20727351.7
(22) Date de dépôt: 17.03.2020
(51) Int. Cl.: C22B 7/00, C22B 7/04

(54) **PROCÉDÉ DE RÉCUPÉRATION DANS DES FERRO-ALLIAGES DES MÉTAUX CONTENUS DANS DES CATALYSEURS USÉS**
VERFAHREN ZUR RÜCKGEWINNUNG VON IN GEBRAUCHTEN KATALYSATOREN AUS FERROLEGIERUNGEN ENTHALTENEN METALLEN
METHOD FOR RECOVERING METALS CONTAINED IN SPENT CATALYSTS FROM FERRO-ALLOYS

(43) Date de publication de la demande: 25.01.2023
(73) Titulaire: Eco'ring, 42110 Chambéon (FR); Eurecat S.A., 07800 La Voulte-sur-Rhône (FR)
(72) Inventeur: PICARD, Lionel, 42110 FEURS (FR); ROTH, Jean-Luc, 57070 METZ (FR)
(74) Mandataire: Casalonga
(86) Numéro de dépôt international: PCT/FR2020/000060
(87) Numéro de publication internationale: WO 2021/186113

(56) Documents cités:
- EP-A1- 1 983 066
- JP-A- 2002 235 123
- US-A1- 2019 330 720
- RAKITIN D I ET AL: "Founding of chrome-nickel master alloys from spent nickel alumina containing catalyzer and waste of ferroalloy production", STAL`, METALLURGIA, MOSCOW, RU, no. 10, 1 octobre 1996 (1996-10-01), pages 29-31, XP009100192, ISSN: 0038-920X
- PANKRATZ E: "AUFARBEITUNG VON VERBRAUCHTEN NI-FETTKATALYSATOREN", FETT - LIPID.FAT SCIENCE TECHNOLOGY, WILEY-VCH VERLAG,WEINHEIM, DE, vol. 95, 1 janvier 1993 (1993-01-01), pages 487-490, XP000377515, ISSN: 0931-5985, DOI: 10.1002/LIPI.19930951304

## Description

La présente invention concerne un procédé qui permet de recycler les métaux contenus dans les catalyseurs usés provenant des procédés de traitement d'hydrocarbures effectués dans les domaines du raffinage pétrolier et de la pétrochimie, en les récupérant dans des ferro-alliages.

### ETAT DE L'ART ANTERIEUR

Les procédés de traitement des hydrocarbures effectués dans les raffineries et/ou les unités de pétrochimie incluent un certain nombre de traitements réalisés en présence de catalyseurs à base de composés métalliques. Peuvent être cités, à titre d'exemples non limitatifs, les procédés d'hydrocraquage, de réformage, d'hydrogénation, et les procédés dits d'hydrotraitement tels que les procédés d'hydrodésulfuration, d'hydrodéazotation, d'hydrodéaromatisation, d' hydrodémétallation.

Les catalyseurs employés dans ces procédés se présentent sous forme de particules solides comprenant un support poreux à base d'un ou plusieurs oxydes inorganiques réfractaires, tel que l'alumine, sur lequel sont déposés un ou plusieurs métaux catalytiquement actifs, comprenant au moins un métal du groupe VIII de la classification périodique des éléments tels que le nickel et/ou le cobalt, généralement associé à un ou plusieurs métaux du groupe VIB tels que le molybdène.

Au cours de leur utilisation, ces catalyseurs se désactivent progressivement, notamment du fait du dépôt à leur surface de coke, c'est-à-dire d'un mélange d'hydrocarbures lourds, de résidus de carbone, d'impuretés métalliques contenues dans les charges traitées telles que notamment des composés du vanadium.

Après leur cycle d'utilisation ces catalyseurs peuvent être recyclés par un traitement dit de régénération au cours duquel le coke est éliminé par combustion, et qui vise à conférer au catalyseur un niveau d'activité le plus proche possible de son niveau initial.

Toutefois, après un ou plusieurs cycles d'utilisation et de recyclage, les catalyseurs usés ne sont plus aptes à être régénérés de manière techniquement et économiquement satisfaisante.

Dans un souci d'économie et de préservation de l'environnement, on cherche désormais de plus en plus à valoriser ces catalyseurs usés en fin de vie.

Dans les catalyseurs usés, les métaux se trouvent essentiellement sous forme de sulfures métalliques avec des teneurs en hydrocarbure, soufre et en carbone pouvant aller, pour chacun, jusqu'à 20% en masse du catalyseur.

On distingue principalement trois états pour les catalyseurs usés :
- Catalyseur usé à l'état brut : ces catalyseurs n'ont subi aucun traitement, et contiennent les métaux sous forme de sulfures ainsi que du soufre et des composés carbonés essentiellement sous forme de carbone fixe et d'hydrocarbures à des teneurs pouvant aller jusqu'à 20% en masse chacun ;
- Catalyseur usé à l'état déshuilé : ces catalyseurs ont subi une extraction quasi totale des hydrocarbures, typiquement sous l'action de la température et d'un flux de gaz, qui peut être l'azote, la vapeur d'eau et, sous certaines conditions de température modérée, l'air. Ils contiennent les métaux sous forme de sulfures ainsi que du soufre et du carbone sous forme de carbone fixe à des teneurs pouvant aller jusqu'à 20% en masse chacun, et un résiduel d'hydrocarbures à une teneur pouvant aller jusqu'à 5% en masse ;
- Catalyseur usé à l'état calciné ou « grillé » : ces catalyseurs ont subi un traitement de calcination, ils contiennent les métaux essentiellement sous forme d'oxydes, leur teneur en soufre et en composés carbonés est inférieure à 3% chacun, leur teneur en hydrocarbures étant nulle.

Dans la présente demande, on désigne par « composés carbonés » tous les composés renfermant du carbone, qu'ils soient de nature organique ou inorganique. Ce terme regroupe les hydrocarbures et le carbone fixe.

Par « carbone fixe », on désigne tous les composés contenant du carbone qui sont différents des hydrocarbures. Ce terme correspond à ce que l'on désigne de manière connue en soi sous l'appellation « coke ».

Le tableau 1 ci-dessous présente, à titre d'exemple non limitatif, des compositions chimiques typiques pour des catalyseurs dits «NiMo » ou « CoMo » ou « NiCoMo » ou « NiMoV» sur support d'alumine aux états bruts, déshuilés et grillés. Dans ce tableau, toutes les teneurs sont exprimées en pourcentage en poids par rapport total du catalyseur brut, déshuilé ou grillé respectivement, à l'exception des teneurs en nickel, cobalt, molybdène et vanadium qui sont exprimées en pourcentage en poids par rapport total du catalyseur grillé (teneur en métal à l'état d'oxyde, sur le catalyseur sans hydrocarbures dont la teneur en carbone est inférieure à 3% en poids et la teneur en soufre est inférieure à 3% en poids).

**Tableau 1**

| Etat | Brut | Déshuilé | Grillé |
|---|---|---|---|
| Hydrocarbures | Jusqu'à 20% | Jusqu'à 5% | 0 |
| Soufre | Jusqu'à 20% | Jusqu'à 20% | Jusqu'à 3% |
| Carbone fixe | Jusqu'à 20% | Jusqu'à 20% | Jusqu'à 3% |
| Alumine Al₂O₃ | Jusqu'à 40% | Jusqu'à 50% | Jusqu'à 60% |
| Autres oxydes (SiO₂, FeOₓ,...) | Jusqu'à 3% | Jusqu'à 4% | Jusqu'à 5% |
| Nickel | 2 à 5% | 2 à 5% | 2 à 5% |
| Cobalt | 2 à 5% | 2 à 5% | 2 à 5% |
| Molybdène | 5 à 20% | 5 à 20% | 5 à 20% |
| Vanadium | 0 à 20% | 0 à 20% | 0 à 20% |

De manière conventionnelle, les catalyseurs usés bruts sont déshuilés avant tout traitement ultérieur.

De manière également conventionnelle, les différentes filières de recyclage existantes, hydrométallurgiques ou pyrométallurgiques, opèrent toutes une opération de grillage par calcination qui vise à transformer les sulfures métalliques en oxydes et à éliminer le carbone, gênant pour opérer les filières hydrométallurgiques.

Il en résulte un gaspillage de l'énergie contenue dans les hydrocarbures.

Le molybdène, le vanadium et parfois aussi le nickel et/ou le cobalt sont le plus souvent séparés et purifiés après grillage, par une succession d'étapes hydro-métallurgiques, avec lixiviation et précipitation sélective de certains éléments. L'inconvénient principal de cette filière hydro-métallurgique est sa succession d'étapes nombreuses et complexes jusqu'aux produits finis, qui implique des consommations d'énergie et de réactifs importants notamment de produits chimiques, et des impacts environnementaux forts en termes de déchets de production et d'émissions de CO₂, avec des coûts associés importants. De plus, les rendements de récupération des métaux tels que le nickel, le cobalt, le molybdène, le vanadium (Ni, Co, Mo, V) sont relativement faibles.

Une filière moins répandue, mais appliquée notamment en Europe, consiste à faire suivre le grillage par une fusion en four électrique du type four électrique à arc submergé ou du type four électrique à arc libre (EAF),- dont une variante est le four électrique à courant continu- puis à réaliser, dans une étape séparée, l'affinage du ferro-alliage obtenu notamment par élimination du soufre et du phosphore dans un autre réacteur, puis éventuellement la conversion du vanadium scorifié en ferro-vanadium par Silico-Aluminothermie.

Dans ce procédé également les consommations d'énergie sont particulièrement importantes. La succession d'étapes et de réacteurs conduit à des consommations élevées d'électricité.

De plus, dans le cas des catalyseurs contenant du vanadium en proportion notable (par exemple supérieure à 5 % en poids), celui-ci est transféré très majoritairement au laitier et solidifié. Ce laitier est ensuite traité dans une étape hydro-métallurgique ou pyrométallurgique pour en extraire le vanadium.

Le brevet EP 1 983 066 présente un procédé permettant de traiter directement dans un four électrique des catalyseurs déshuilés (sans grillage préalable), par chargement et traitement de ces catalyseurs sur un bain de fonte (fer carburé à 2-4%C), brassé par une injection de gaz neutre, et avec ajout de chaux permettant d'obtenir un laitier fluide. Cette fusion en ferro-alliage est suivie par l'application subséquente dans le même four de traitements de désulfuration complémentaire éventuelle (à la chaux), puis de déphosphoration du ferro-alliage (déphosphoration par injection d'oxygène et ajout de chaux et d'oxyde de fer), permettant d'en abaisser les teneurs de soufre et de phosphore à moins de 0,1%.

Cependant ce procédé présente plusieurs inconvénients.
D'une part, les composés carbonés présents dans les catalyseurs bruts, incluant aussi bien du carbone fixe que le carbone sous forme d'hydrocarbures n'est pratiquement pas utilisé. Seul le carbone fixe est partiellement utilisé dans les réactions de réduction, par exemple du type : NiO + C → Ni + CO. Toutefois, le gaz CO, le soufre et l'ensemble des hydrocarbures présents dans les catalyseurs bruts voient leur important contenu énergétique gaspillé.
D'autre part, les traitements de désulfuration complémentaires et de déphosphoration du ferro-alliage sont réalisés dans un four électrique dont les performances sont limitées par la géométrie de la technologie, en particulier bain plat et statique, dont il résulte une limitation des échanges entre le bain de fonte et le laitier, malgré l'application d'un brassage par gaz. Il s'ensuit que ces traitements sont coûteux en temps, gaz de brassage et apport complémentaire d'énergie pour maintenir la température du bain métallique et du laitier. En outre, pour ces mêmes raisons de géométrie de technologie, la formation de laitier en proportions importantes (plus de 1 tonne de laitier par tonne de catalyseur traité), oblige à effectuer une élimination (ou « décrassage ») fréquente du laitier, qui induit une perte de temps et de productivité, du fait de l'interruption régulière du procédé.
Enfin, lorsque les catalyseurs contiennent du vanadium, celui-ci est transféré au laitier, qui est dans le cas de ce procédé décrassé par petites quantités, et qui doit être traité séparément pour en extraire le vanadium. Ce traitement du vanadium présent dans le laitier est donc effectué après refroidissement du laitier, ce qui nécessite une nouvelle dépense d'énergie (électricité + électrodes) pour le refondre avant d'en extraire le vanadium par une méthode pyro-métallurgique de type silico-aluminothermie.

### OBJET DE L'INVENTION

La présente invention vise à proposer un nouveau procédé permettant une récupération efficace des métaux présents dans la catalyseurs usés, tels que le molybdène, le nickel, le cobalt et éventuellement le vanadium, tout en étant moins coûteux et notamment en nécessitant une moindre consommation d'énergie par rapport aux procédés existants.

La Demanderesse a mis au point un procédé de récupération de ces métaux à partir des catalyseurs usés, qui se caractérise en ce qu'il est mis en oeuvre dans un réacteur de fusion du type convertisseur rotatif contenant un bain de fonte liquide et en présence d'une injection ciblée de gaz oxygéné. Ce type de réacteur est capable de réaliser de par sa rotation un brassage plus énergique qu'un four statique à bain plat, et de contenir des quantités de laitier plus importantes qu'un four électrique de même capacité.

Le procédé selon l'invention permet de récupérer efficacement les métaux de valeur tels que molybdène, le nickel, le cobalt, le tungstène, qui sont transférés dans la fonte. Lorsque le catalyseur usé contient du vanadium, le procédé de l'invention permet de gérer de grandes quantités de laitier riche en vanadium, ce laitier pouvant ainsi être traité « à chaud » c'est-à-dire sans nécessiter d'étape de chauffage spécifique, notamment en transférant directement le laitier dans un autre réacteur rotatif.

Le procédé selon l'invention présente l'avantage important de valoriser l'énergie contenue dans les composés carbonés, notamment les hydrocarbures et le carbone fixe, et le soufre présents dans les catalyseurs bruts et les catalyseurs déshuilés à des degrés plus ou moins importants.

La présente invention a ainsi pour objet un procédé de traitement d'un catalyseur usé contenant au moins un oxyde minéral réfractaire, un ou plusieurs métal ou métaux sous forme de sulfure(s) choisi(s) parmi les métaux suivants : le molybdène, le nickel, le cobalt, le tungstène, le vanadium et des composés carbonés. Ce procédé comprend les étapes successives suivantes :
a) dans un four de fusion de type convertisseur rotatif, préparer un bain de fonte à l'état fondu surmonté d'une couche de laitier ; puis
b) introduire dans le four ledit catalyseur usé et le mettre en contact avec le laitier et le bain de fonte à l'état fondu, tout en maintenant le four en rotation et en injectant un gaz comburant contenant de l'oxygène dans le four, au-dessus du mélange de catalyseur, de laitier et de fonte, de manière à provoquer la combustion des composés carbonés et/ou soufrés qui se dégagent du catalyseur au contact du laitier et de la fonte liquide; puis
c) extraire du four par coulées séquentielles le laitier formé à l'étape b) de manière d'une part à récupérer dans le four un bain de fonte enrichi en métal ou métaux, et d'autre part à récupérer un laitier contenant les constituants du catalyseur différents des métaux, à l'exception du vanadium qui lorsque le catalyseur usé contient du vanadium, se retrouve dans le laitier.

Le procédé selon l'invention permet ainsi de valoriser les métaux contenus dans les catalyseurs, en les transférant et en les séparant de manière efficace soit dans un bain de fonte pour les métaux molybdène, nickel, cobalt, tungstène; soit dans le laitier pour le vanadium, tout en utilisant l'énergie contenue dans les catalyseurs usés, à savoir les composés carbonés (sous forme de carbone fixe et d'hydrocarbures), et le soufre.

En particulier, au cours de la phase très endothermique de la fusion du catalyseur usé à l'étape b), les composés carbonés, les hydrocarbures et les sulfures métalliques sont en grande partie transformés en sulfures volatiles de type SOx et en CO₂ en présence du gaz oxygéné injecté, ce qui valorise leur énergie en chauffant le contenu du four et en permettant de maintenir sa température au niveau requis.

La technologie du convertisseur rotatif s'est avérée particulièrement adaptée pour la réalisation d'une telle combustion thermiquement efficace, contrairement au four électrique statique. En effet, outre la géométrie avantageuse du convertisseur, sa rotation permet de retransférer au bain de fonte et de laitier la chaleur transmise par la combustion via la paroi réfractaire du four.

Typiquement, une tonne de catalyseur brut contenant 10% en poids de carbone fixe et 10% en poids d'hydrocarbures présente un contenu énergétique de l'ordre de 2000 kWh (thermique), due à la combustion totale en CO₂ et H₂O (fumées sortant froides). Dans les technologies conventionnelles, cette énergie est perdue. Pour une tonne de catalyseur brut contenant 20% en poids de carbone fixe et 20% en poids d'hydrocarbures, ce contenu énergétique peut aller jusqu'à environ 4000 kWh. Dans le cas d'une fusion électrique du catalyseur, l'énergie nécessaire pour la fusion est de l'ordre de 1000 à 1500 kWh (électrique) par tonne de catalyseur. Ainsi, non seulement l'énergie contenue dans les catalyseurs sous forme de carbone fixe, d'hydrocarbures et de soufre est perdue, mais en plus il est nécessaire d'ajouter une consommation importante d'énergie électrique pour opérer la fusion.

Ainsi, le bilan énergétique du procédé selon l'invention par rapport aux technologies existantes est particulièrement avantageux du fait de l'utilisation efficace du carbone, des hydrocarbures, et du soufre en tant que combustibles. En effet, dans les technologies conventionnelles ces éléments sont éliminés soit au préalable au traitement (hydrométallurgique ou pyrométallurgique) soit en complément de traitement de fumées dans une chambre de post-combustion séparée et leur énergie est gaspillée. De plus, ce complément de traitement de fumées en chambre de post-combustion nécessite la mise en oeuvre de moyens de refroidissement des fumées après post-combustion, donc des consommations supplémentaires de gaz naturel (pour la post-combustion) et d'électricité (pour le refroidissement ), avec des volumes de fumées à traiter sur-dimensionnés, des consommations de réactifs de désulfuration des fumées importantes via la dilution des fumées et leur rendement de neutralisation, ce qui entraine également des consommations de gaz, d'électricité, des déchets à éliminer et transporter.

De plus, la technologie du convertisseur rotatif permettant de renverser aisément le réacteur, les phases de coulée du laitier et du métal sont plus aisées et sûres plus comparées aux technologies avec bouchage-débouchage des trous de coulée métal-laitier des fours électriques employés dans l'art antérieur.

D'autres objets, caractéristiques, aspects et avantages de l'invention apparaîtront encore plus clairement à la lecture de la description et des exemples qui suivent, ainsi que des figures ci-jointes.
Les Figures 1 et 2 illustrent schématiquement la mise en oeuvre des étapes b) et c) du procédé selon la présente invention.
La Figure 3 représente un exemple de four de fusion de type convertisseur rotatif approprié pour la mise en oeuvre de l'invention.

Dans ce qui va suivre, et à moins d'une autre indication, les bornes d'un domaine de valeurs sont comprises dans ce domaine, notamment dans les expressions « compris entre » et « allant de ... à ...».

Par ailleurs, les expressions « au moins un » et « au moins » utilisées dans la présente description sont respectivement équivalentes aux expressions « un ou plusieurs » et « supérieur ou égal ».

### DESCRIPTION DETAILLEE

Le procédé selon l'invention comprend une première étape a) qui consiste à préparer un bain de fonte à l'état fondu surmonté d'une couche de laitier, dans un four de fusion de type convertisseur rotatif.

L'on peut procéder en faisant chauffer dans le four une charge de granulés de fonte et/ou des lingots de fonte, de ferro-alliage et/ ou des ferrailles métalliques de fonte et/ou d'acier, de manière à les faire fondre.

Un mode de réalisation préféré consiste à partir d'un bain de fonte ayant une composition la plus proche possible de celle qui résultera du traitement de la charge de catalyseur usé introduit à l'étape b). En effet, il est avantageux de traiter un type de catalyseur donné dans une campagne de longue durée (typiquement de plusieurs jours), ce qui permet de fabriquer sur cette durée un ferro-alliage de composition stable.

La couche de laitier peut être obtenue en ajoutant dans le four de la chaux et de l'alumine (par exemple l'alumine des catalyseurs) dans une proportion relative, par exemple, respectivement de 40% et 60% en poids. Ce composé alumine-chaux est réputé pour être à bas point de fusion et surtout extrêmement désulfurant, c'est-à-dire qu'il va minéraliser le soufre plutôt que celui-ci parte dans les fumées.

Un convertisseur rotatif est un dispositif connu en soi dans le domaine métallurgique, qui consiste en un réacteur chauffé dont les parois internes sont en matériau réfractaire afin de supporter de très hautes températures, entrainé en rotation autour de son axe de symétrie au moyen d'un moteur.

La température à laquelle le bain de fonte est chauffé à l'étape a) est typiquement comprise dans la gamme allant de 1400°C à 1650°C, et de préférence de 1450°C à 1550°C.

Dans une seconde étape b) le catalyseur usé est introduit dans le convertisseur maintenu en rotation, de manière à le mettre en contact avec le laitier surnageant et le bain de fonte à l'état fondu, ce qui provoque sa fusion.

Selon un mode de réalisation préféré, des matériaux couramment dénommés « fondants » en métallurgie, qui peuvent être en particulier choisis parmi de la chaux, de l'oxyde de fer, du carbonate de sodium, et du fluorure de calcium, sont également introduits dans le four au cours de cette étape.

Simultanément, un gaz contenant de l'oxygène, dénommé gaz comburant, est injecté en continu dans le four, au-dessus du mélange de catalyseur, de laitier et de fonte, ce qui provoque la combustion ou la transformation des composés carbonés et/ou soufrés qui se dégagent du catalyseur tout en restituant leur énergie de combustion.

Le gaz comburant peut être constitué d'oxygène, d'air enrichi en oxygène, ou d'un mélange d'oxygène et de gaz inerte tel que l'azote. De préférence, le gaz comburant présente une teneur en oxygène d'au moins 30% en poids.

Pour transformer efficacement les hydrocarbures et le gaz notamment de type monoxyde de carbone (CO) et gaz soufrés qui se dégagent du catalyseur en énergie, l'injection du gaz comburant est avantageusement effectuée au moyen d'un ou de plusieurs injecteur (s) de gaz dont l'axe est sensiblement parallèle au bain de fonte et de laitier, et avec une pression modérée d'injection de manière à réaliser un jet de faible impulsion (ou jet « mou ») ne pénétrant pas dans le bain de métal et de laitier, par opposition aux jets « durs » utilisés par ailleurs en métallurgie pour pénétrer dans le bain métal-laitier.

En effet le but n'est pas d'injecter le gaz comburant dans le bain de fonte ou de laitier, mais de créer au-dessus du bain et du laitier une source de chaleur par la combustion notamment des hydrocarbures, du carbone fixe, du soufre et du monoxyde de carbone. Cette chaleur est transmise à la charge de fonte, de laitier, de matériaux fondants et de catalyseur de manière directe, et de manière indirecte via la paroi réfractaire du convertisseur, grâce à la rotation de celui-ci.

Durant l'étape b), la température du four est avantageusement maintenue dans la gamme allant de 1400°C à 1650°C.

Au cours de l'étape b), le laitier présent au-dessus du bain de fonte s'enrichit progressivement en constituants du catalyseur comprenant notamment les oxydes réfractaires (alumine, silice,...) une partie du soufre, et le vanadium lorsque le catalyseur usé traité en contient. Les matériaux « fondants » éventuellement ajoutés se retrouvent également dans le laitier sauf l'oxyde de fer qui se partage entre le bain de fonte sous forme de fer et le laitier.

Les métaux choisis parmi le molybdène, le nickel, le cobalt, le tungstène, présents dans le catalyseur usé sous forme d'oxyde, sont réduits en présence du carbone présent dans le catalyseur usé, et passent dans le bain de fonte. Par exemple dans le cas du nickel, la rédaction de réduction est la suivante : NiO + C → Ni + CO.

Selon un mode de réalisation, un gaz combustible hydrocarboné est également injecté dans le four au cours de l'étape b). Ce gaz combustible comprend de préférence des hydrocarbures légers, tels que des hydrocarbures comprenant de 1 à 4 atomes de carbone. Un exemple de gaz combustible particulièrement préféré est le gaz naturel.

Ce gaz combustible peut être injecté conjointement avec le gaz comburant, c'est-à-dire au moyen du même injecteur, ou au moyen d'un injecteur distinct.

Ce mode de réalisation est avantageux lorsque l'on introduit au cours de l'étape b) des catalyseurs contenant très peu de carbone, par exemple des catalyseurs grillés en tout ou partie. En effet l'injection de gaz combustible hydrocarboné permet d'ajouter un appoint de composés carbonés pour promouvoir les réactions de réduction des oxydes métalliques. Il est également préférable dans ce cas de mettre en oeuvre un gaz comburant contenant des teneurs plus élevées en oxygène.

Il est mis fin à l'étape b) soit lorsque tout le catalyseur usé a été traité, soit lorsque le convertisseur rotatif est plein et qu'il ne peut plus y être chargé de catalyseur supplémentaire compte tenu des ajouts nécessaires (par exemple de fondants) le cas échéant.

A l'issue de l'étape b), le procédé comprend une étape c) consistant à extraire du four par coulée le laitier formé à l'étape b). La coulée est réalisée de manière connue en soi, de manière séquentielle.

Ceci permet de récupérer dans le four un bain de fonte enrichi en métal ou métaux extraits du catalyseur.

Après l'évacuation du laitier (étape c), la séquence des étapes (b) puis (c) peut être répétée une ou plusieurs fois, de telle sorte que le bain de fonte contenu dans le four est à nouveau enrichi en métaux, et ce autant que nécessaire jusqu'à obtention d'une fonte ayant la teneur souhaitée en métaux. Dans ce cas, à l'issue de l'étape c), il est de préférence directement procédé à l'étape b) d'introduction d'un catalyseur usé, de préférence sans refroidissement intermédiaire du bain de fonte.

Une fois la teneur souhaitée en métaux atteinte dans le bain de fonte, le procédé selon l'invention peut comprendre en outre une ou plusieurs étapes de traitement ou d'affinage du bain de fonte, de préférence réalisées dans le convertisseur rotatif.

Notamment, le procédé peut comprendre en outre une ou plusieurs étapes de désulfuration et de déphosphoration du bain de fonte de manière abaisser ses teneurs en soufre et en phosphore typiquement à une valeur inférieure à 0,1% en poids. Ces traitements peuvent être réalisés en ajoutant dans le convertisseur rotatif de la chaux et/ou une solution de bicarbonate-carbonate de sodium, contenant de l'oxyde de fer.

Lors de ces opérations de traitement, il peut être réalisé une ou plusieurs opérations dites de « décrassage », c'est-à-dire de vidange, du laitier, jusqu'à l'obtention des teneurs en soufre et en phosphore visées.

A l'issue des éventuelles étapes de traitement, le bain de fonte enrichi en métal ou métaux est coulé hors du four, pour sa solidification. Il peut alors être commercialisé.

Par ailleurs, le laitier éliminé du convertisseur rotatif à l'étape c) est également récupéré.

Selon une première variante, le laitier est laissé refroidir de manière à provoquer sa solidification. Il peut être ensuite directement valorisé par exemple sous forme d'aluminate de calcium, notamment dans le cas où le(les) catalyseur(s) usé(s) dont il est issu ne contient pas de vanadium.

Selon une seconde variante, applicable dans le cas où le(les) catalyseur(s) usé(s) traité(s) contient du vanadium, le laitier récupéré à l'étape c) peut être avantageusement transféré dans un second four, dans lequel il est traité pour en extraire le vanadium. Selon un mode de réalisation préféré, ce second four est également un convertisseur rotatif. Le vanadium peut être extrait par ajout au laitier d'aluminium et/ou silicium en granulés, ce qui permet de récupérer d'une part un laitier dépourvu de vanadium et d'autre part du ferro-vanadium. Le laitier peut alors être ensuite valorisé par exemple sous forme de silico- -aluminate de calcium.

Les gaz s'échappant du convertisseur rotatif lors de l'étape b) du procédé selon l'invention sont traités dans des dispositifs appropriés, connus en soi.

Selon un mode de réalisation préféré, le procédé met en oeuvre des dispositifs de traitement des gaz permettant l'obtention de normes d'émission basses.

Dans le cadre de la présente invention, les dispositifs de traitement des gaz peuvent être de dimensions moindres, notamment contenir des chambres de post-combustion des gaz dont la taille est réduite d'au moins 30% par rapport aux dispositifs de l'art antérieur en four électrique, du fait de la combustion efficace dans le convertisseur rotatif des composés combustibles contenus dans les catalyseurs usés traités.

De plus, l'invention permet de diminuer de manière conséquente les quantités de réactifs employés pour la désulfuration des gaz (par exemple du lait de chaux, une solution de bicarbonate de sodium) du fait d'une meilleure captation du soufre d'au moins 30% dans le laitier via le brassage mécanique induit par la rotation du convertisseur au cours de l'étape b).

Le procédé selon la présente invention permet de traiter de manière efficace tout catalyseur usé employé dans le traitement et/ou la conversion d'hydrocarbures dans les domaines du raffinage pétrolier et de la pétrochimie.

Ces catalyseurs se présentent généralement sous forme de particules solides de petite taille telles que des billes, des particules plus ou moins cylindriques, des extrudés.

Ces catalyseurs comprennent un support poreux généralement constitué d'un ou plusieurs oxydes inorganiques réfractaires sur lequel sont déposés un ou plusieurs métaux catalytiquement actifs, qui peuvent être choisis par parmi les métaux des groupes VB, VIB, IB, VIII et VIB de la classification périodique des éléments.

Le support de ces catalyseurs est formé d'un ou plusieurs oxydes minéraux réfractaires tels que notamment les alumines, les silices, les silice-alumines, les zéolithes, les zircones, les oxydes de titane et de bore, et les mélanges de tels oxydes.

En particulier, le procédé selon l'invention est particulièrement approprié pour le traitement de catalyseurs usés contenant au moins l'une des associations métalliques suivantes : CoMo, NiMo, NiCoMo, NiMoV, NiW, NiMoWCo FeCeMoK.

Ces catalyseurs peuvent également contenir à l'état usé du vanadium, provenant d'une contamination par les charges d'hydrocarbures traitées au cours des cycles d'utilisation du catalyseur.

Comme décrit précédemment, notamment lorsqu'ils sont traités à l'état brut ou déshuilé, ces catalyseurs contiennent en outre des composés carbonés, qui peuvent être notamment sous forme d'hydrocarbures et de carbone fixe, ainsi que du soufre entre autres sous forme de sulfures métalliques.

Selon un mode de réalisation préféré, le catalyseur usé introduit à l'étape b) est à l'état brut, c'est-à-dire qu'il n'a subi aucun traitement préalable.

Un tel catalyseur contient les métaux sous forme de sulfures ainsi que des hydrocarbures, du soufre et du carbone fixe. Sa teneur en hydrocarbures est de préférence comprise dans la gamme allant de 5% à 20% en poids, par rapport au poids total du catalyseur usé, de préférence de 10 à 20% en poids.

Selon un second mode de réalisation, le catalyseur usé introduit à l'étape b) est à l'état déshuilé, c'est-à-dire qu'il a subi un lavage préalable sous l'action de la température et d'un flux de gaz, qui peut être l'azote, la vapeur d'eau et l'air.

Un tel catalyseur contient les métaux sous forme de sulfures ainsi que des hydrocarbures, du soufre et du carbone fixe. Sa teneur en hydrocarbures est de préférence comprise dans la gamme allant de 0,1 % à 5% en poids, par rapport au poids total du catalyseur usé.

Quel que soit le mode de réalisation, le catalyseur usé contient du carbone fixe à une teneur de préférence comprise dans la gamme allant de 5% à 20% en poids, par rapport au poids du catalyseur usé, de préférence de 10 à 20% en poids.

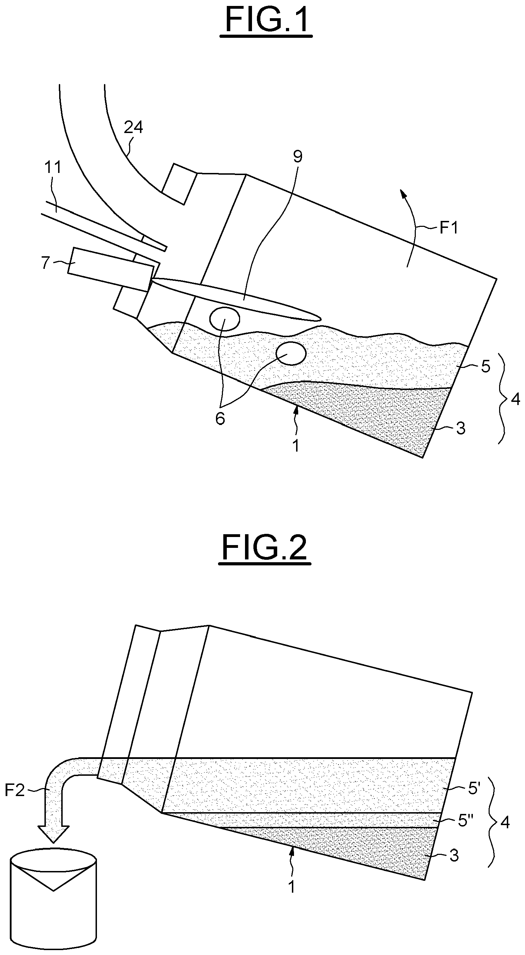

La Figure 1 illustre de manière schématique la mise en oeuvre de l'étape b).

Cette figure présente un four 1 de type convertisseur rotatif, maintenu en rotation comme illustré par la flèche F1.

Ce four contient un mélange 4 formé d'un bain de fonte à l'état fondu 3 au-dessus duquel se trouve une couche de laitier 5 issue de la fusion du catalyseur usé traité avec des « 'fondants ».

Un injecteur 7 injecte dans le four au-dessus du mélange 4 un gaz comburant oxygéné de manière à provoquer la combustion 9 des composés carbonés et/ou soufrés qui se dégagent du catalyseur au contact avec le laitier et la fonte liquide schématisés par les bulles 6.

Cet injecteur peut être par exemple un brûleur connu sous l'appellation « Oxygaz », alimenté en gaz comburant oxygéné et éventuellement en gaz combustible hydrocarboné suivant la quantité de carbone et d'hydrocarbure apportés par les catalyseurs. A noter que la teneur en oxygène du gaz comburant est également ajustée en fonction de la quantité de carbone et d'hydrocarbure apportés par les catalyseurs et par le gaz combustible le cas échéant.

De préférence, le gaz comburant oxygéné est injecté en excès par rapport à la combustion des composés carbonés et/ou soufrés qui se dégagent du catalyseur et à la combustion du gaz éventuellement injecté au brûleur.

Le catalyseur usé à traiter est introduit dans le four 1 au moyen de la conduite d'alimentation 11. La conduite 24 permet de récupérer les fumées qui se dégagent du four.

La Figure 2 représente l'étape d'extraction du laitier 5 hors du four 1 : la rotation du four est stoppée et le laitier 5 est extrait par coulée F2.

Lors de cette étape de coulée, on procède à l'extraction de la majeure partie 5' du laitier 5, tout en conservant une petite fraction 5" du laitier surnager au-dessus du bain de fonte 3.

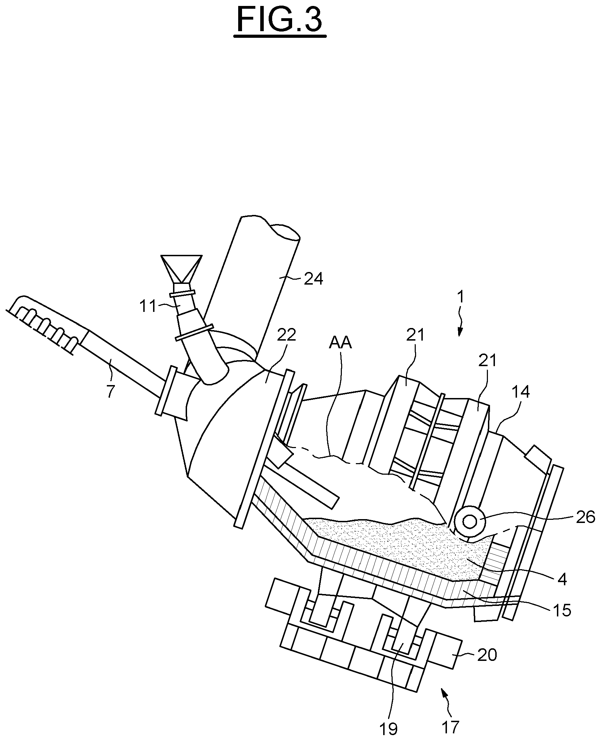

La figure 3 présente un dispositif classique de convertisseur rotatif de type convertisseur rotatif, également connu sous l'appellation anglaise « Top Blown Rotary Converter » (ou « TBRC »). Ce dispositif est connu en soi dans le domaine de la métallurgie.

Le four 1 contient des parois 15 de matériau réfractaire résistant aux températures très élevées. Il peut être entrainé en rotation autour de son axe de symétrie au moyen d'un ensemble moteur 17 qui entraine la couronne d'entrainement 21.

L'ensemble moteur 17 comprend un moteur 20 qui entraine en rotation un axe sur lequel des roues crantées 19 lesquelles entrainent en rotation les crants solidaires du caisson du convertisseur.

Une bande de roulement 14 permet de maintenir le convertisseur dans son axe. Les éléments 22 et 26 désignent respectivement le cône ou chapeau statique qui coiffe le convertisseur, et une roue de blocage. Ces éléments sont connus en soi.

La partie basse de la figure 3 au-dessous de la ligne de coupe AA montre la partie intérieure du four 1, qui contient un mélange 4 de fonte et de laitier.

Un brûleur 7 de type « oxygaz », alimenté par un gaz comburant oxygéné dont la teneur en oxygène est ajustée suivant la quantité de carbone et d'hydrocarbure apportés par le catalyseur usé, permet d'injecter à l'intérieur du four 1 au-dessus du mélange 4 un excès de gaz comburant oxygéné. Le dispositif permet également d'introduire simultanément un gaz combustible hydrocarboné si besoin. Le catalyseur usé à traiter est introduit dans le four 1 au moyen de la conduite d'alimentation 11, conjointement avec des composés fondants. La conduite 24 permet de récupérer les fumées qui se dégagent du four lors de son fonctionnement, qui contiennent essentiellement les produits issus de la combustion des composés carbonés et/ou soufrés qui se dégagent du catalyseur au contact du laitier et de la fonte liquide, et de les acheminer vers un ensemble de traitement des fumées non représenté. Cet ensemble peut comprendre si nécessaire une enceinte de post-combustion des fumées, ainsi qu'une enceinte de récupération du soufre, connues en soi.

Les exemples ci-après sont donnés à titre d'illustration de l'invention, et ne sauraient être interprétés de manière à en limiter la portée.

### EXEMPLES

### Exemple 1 : Traitement d'un catalyseur brut

Le catalyseur traité est un catalyseur usé classique contenant du nickel et du molybdène. Ce catalyseur a été traité à l'état brut. Sa composition (pour 1t de catalyseur) est détaillée dans le tableau 2 ci-dessous:

**Tableau 2**

| Composants | Quantité en kg (pour 1t de catalyseur) |
|---|---|
| Hydrocarbures | 130 |
| Soufre | 86 |
| Carbone fixe | 90 |
| Phosphore | 3 |
| Alumine Al₂O₃ | 540 |
| Autres oxydes (SiO₂, FeO_{X},...) | 18 |
| Nickel | 23 |
| Molybdène | 110 |

Pour traiter ce catalyseur, on a utilisé un four de type convertisseur rotatif d'une capacité de 10 tonnes.

Ce four contient 3 tonnes d'un bain de fonte de composition similaire à celle donnée au tableau 3 ci-après, et qui résulte de la séquence de production précédente à partir du même catalyseur usé.

Le four a été mis en rotation et le bain de fonte a été chauffé à 1500°C ce qui a provoqué sa fusion.

Un lot d'environ 30 tonnes du catalyseur ci-avant a été introduit progressivement (par chargement continu de l'ordre de 3 t/h) dans le four en rotation, en même temps qu'un débit d'oxygène de 203 Nm³ d'oxygène par tonne de catalyseur est injecté au moyen d'un brûleur au-dessus du bain de fonte, de manière à permettre la combustion des composés (hydrocarbures, CO, composés soufrés) qui se dégagent du catalyseur lors de sa fusion au contact du laitier et du bain de fonte.

Pendant cette étape, le laitier qui s'est formé à la surface du bain de fonte a été éliminé au moyen de coulées effectuées périodiquement à des intervalles de l'ordre de l'heure.

On a récupéré dans le four un bain de fonte enrichi en métal, et dont la composition est détaillée dans le tableau 3 ci-dessous :

**Tableau 3**

| Composants | Quantité en kg |
|---|---|
| Fe | 120 |
| Ni | 21,6 |
| Mo | 99 |
| C | 10 |
| P | 0,6 |
| S | 1,3 |
| Total | 252,5 |

Par ailleurs le laitier récupéré a la composition détaillée dans le tableau 4 ci-dessous :

**Tableau 4**

| Composants | Quantité en kg |
|---|---|
| Al₂0₃ | 540 |
| Ca0 | 370 |
| CaS | 143 |
| SiO₂ | 10 |
| MgO | 120 |
| MoO₃ | 9 |
| FeO | 9 |
| P₂0₅ | 7,5 |
| Total | 1208,5 |

La teneur en soufre du bain métallique (0,51% en poids) peut être abaissée à une valeur cible de 0,1% en poids par une opération de désulfuration classique effectuée dans le convertisseur en traitant le bain de fonte au moyen de 200 kg d'un mélange désulfurant à base de chaux CaO. Ce traitement permet également d'abaisser la teneur en phosphore du bain métallique à 0,1% en poids. Ces opérations ainsi que les agents de désulfuration et de déphosphoration sont ceux mis en oeuvre de manière conventionnelle dans le domaine de la sidérurgie.

Dans cet exemple, l'énergie apportée par combustion des composés qui se dégagent du catalyseur au contact du laitier et de la fonte liquide (hydrocarbures, carbone inorganique et composés soufrés) a permis de couvrir intégralement les besoins métallurgiques et les pertes thermiques du four lors de l'étape b) du procédé.

Le bilan énergétique de l'étape b) est le suivant, exprimé pour une tonne de catalyseur :
Apport énergétique induit par la combustion des composés : 2029 kWh Besoins énergétiques du four :
- Fusion des métaux : 96 kWh
- Fusion du laitier : 670 kWh
- Solde des rédactions endothermiques et exothermiques (combustion des hydrocarbures, du carbone fixe, du soufre, réduction des oxydes métalliques) : - 193 kWh
- Pertes thermiques au niveau des parois du réacteur : 400 kWh
- Pertes énergétiques par les fumées : 1056 kWh.

### Total des besoins: 2029 kWh

### Example 2 : Traitement d'un catalyseur déshuilé

L'exemple 1 a été reproduit, en utilisant un catalyseur usé classique contenant du nickel, du molybdène et du vanadium. Ce catalyseur a été traité à l'état déshuilé, c'est-à-dire après avoir subi une opération de strippage à la vapeur d'eau. Sa composition (pour 1t de catalyseur) est détaillée dans le tableau 5 ci-dessous:

**Tableau 5**

| Composants | Quantité en kg (pour 1t de catalyseur) |
|---|---|
| Hydrocarbures | 0 |
| Soufre | 110 |
| Carbone inorganique | 100 |
| Phosphore | 37 |
| Alumine Al₂O₃ | 433 |
| Autres oxydes (SiO₂, FeOₓ,...) | 131 |
| Nickel | 38 |
| Molybdène | 37 |
| Vanadium | 114 |

Ce catalyseur a été traité dans le même un four de type convertisseur rotatif que celui employé dans l'exemple 1, d'une capacité de 10 tonnes. Ce four contient 3 tonnes d'un bain de fonte de composition proche de celle donnée au tableau 6 ci-après, et qui résulte de la séquence de production précédente à partir du même catalyseur usé.

Le four a été mis en rotation et le bain de fonte a été chauffé à 1500°C ce qui a provoqué sa fusion.

Un lot d'environ 20 tonnes du catalyseur ci-avant a été introduit progressivement (par chargement continu de l'ordre de 3 t/h) dans le four en rotation, en même temps qu'un débit d'oxygène de 114 Nm³ d'oxygène par tonne de catalyseur est injecté au moyen d'un brûleur au-dessus du bain de fonte, de manière à permettre la combustion des composés (hydrocarbures, CO, composés soufrés) qui se dégagent du catalyseur lors de sa fusion au contact du laitier et du bain de fonte.

De plus, un gaz combustible constitué de de 50 Nm³ de gaz naturel a été ajouté conjointement avec 100 Nm³ d'oxygène pur comme comburant par un brûleur dit oxygaz.

A intervalles de temps réguliers de l'ordre d'une heure, le laitier qui s'est formé à la surface du bain de fonte a été-éliminé par coulée.

On a récupéré dans le four un bain de fonte enrichi en métal, et dont la composition est détaillée dans le tableau 6 ci-dessous.

**Tableau 6**

| Composants | Quantité en kg |
|---|---|
| Fe | 204 |
| Ni | 35,7 |
| Mo | 33,6 |
| V | 3,4 |
| C | 12,4 |
| P | 2,8 |
| S | 3,3 |
| Total | 295 |

On obtient également un laitier, dont la composition est détaillée dans le tableau 7 ci(dessous)

**Tableau 7**

| Composants | Quantité en kg |
|---|---|
| Al₂0₃ | 433 |
| Ca0 | 284 |
| CaS | 116 |
| SiO₂ | 7 |
| MgO | 0 |
| MoO₃ | 6 |
| V₂O₅ | 197 |
| FeO | 15 |
| P₂0₅ | 2 |
| Total | 1060 |

La teneur en soufre du bain métallique (1,1% en poids) peut être abaissée à une valeur cible de 0,1% en poids par une opération de désulfuration classique effectuée -éventuellement en plusieurs étapes- dans le convertisseur, en traitant le bain de fonte au moyen d'un mélange désulfurant à base de chaux CaO.

La teneur en phosphore du bain métallique (0,9% en poids) peut ensuite être abaissée à une valeur cible de 0,1% en poids par une opération de déphosphoration classique effectuée dans le convertisseur en traitant le bain de fonte au moyen d'un mélange à base de chaux, d'oxyde de fer et d'oxygène.

Dans cet exemple, l'énergie apportée par combustion des composés qui se dégagent du catalyseur au contact de la fonte liquide (carbone inorganique et composés soufrés) permet de couvrir la majeure partie (72%) des besoins métallurgiques et des pertes thermiques du four lors de l'étape b) du procédé.

Le bilan énergétique lors de l'étape b) est le suivant :
Apport énergétique induit par la combustion des composés : 1298 kWh Besoins énergétiques du four :
- Fusion des métaux : 111 kWh
- Fusion du laitier : 611 kWh
- Rédactions exothermiques et endothermiques (combustion des hydrocarbures, du carbone fixe, du soufre, réduction des oxydes métalliques) : - 116 kWh
- Pertes thermiques au niveau des parois du réacteur : 400 kWh
- Pertes énergétiques par les fumées : 792 kWh.

### Total des besoins: 1798 kWh

Pour équilibrer le bilan énergétique, comme indiqué ci-avant il a été nécessaire d'apporter 500 kWh, sous forme d'un gaz combustible constitué de de 50 Nm³ de gaz naturel, ajouté conjointement avec 100 Nm3 d'oxygène pur comme comburant par un brûleur dit oxygaz.

## Revendications

1. Procédé de traitement d'un catalyseur usé contenant au moins un oxyde minéral réfractaire, un ou plusieurs métal ou métaux sous forme de sulfure(s) choisi(s) parmi les métaux suivants : le molybdène, le nickel, le cobalt, le tungstène, le vanadium, ainsi que des composés carbonés, ce procédé comprenant les étapes successives suivantes :
a) dans un four de fusion de type convertisseur rotatif, préparer un bain de fonte à l'état fondu surmonté d'une couche de laitier ; puis
b) introduire dans le four ledit catalyseur usé et le mettre en contact avec le laitier et le bain de fonte à l'état fondu, tout en maintenant le four en rotation et en injectant un gaz comburant contenant de l'oxygène dans le four, au-dessus du mélange de catalyseur, de laitier et de fonte, de manière à provoquer la combustion des composés carbonés et/ou soufrés qui se dégagent du catalyseur au contact du laitier et de la fonte liquide; puis
c) extraire du four par coulées séquentielles le laitier formé à l'étape b) de manière d'une part à récupérer dans le four un bain de fonte enrichi en métal ou métaux, et d'autre part à récupérer un laitier contenant les constituants du catalyseur différents des métaux, à l'exception du vanadium qui lorsque le catalyseur usé contient du vanadium, se retrouve dans le laitier.

2. Procédé selon la revendication précédente, **caractérisé en ce que** le bain de fonte est porté dans l'étape a) à une température comprise dans la gamme allant de 1400°C à 1650°C, et de préférence de 1450°C à 1550°C.

3. Procédé selon l'une quelconque des revendications précédentes, **caractérisé en ce que** des matériaux dénommés « fondants » choisis parmi de la chaux, de l'oxyde de fer, du carbonate de sodium, et du fluorure de calcium, sont également introduits dans le four au cours de l'étape b).

4. Procédé selon l'une quelconque des revendications précédentes, **caractérisé en ce qu'**un gaz combustible hydrocarboné est également injecté dans le four au cours de l'étape b).

5. Procédé selon la revendication précédente, **caractérisé en ce que** le gaz combustible comprend des hydrocarbures légers, tels que des hydrocarbures comprenant de 1 à 4 atomes de carbone, et de préférence le gaz combustible est du gaz naturel.

6. Procédé selon l'une quelconque des revendications précédentes, **caractérisé en ce que** l'injection de gaz comburant est effectuée à l'étape b) au moyen d'un ou de plusieurs injecteur (s) dont l'axe est sensiblement parallèle au bain de métal et de laitier, avec une pression modérée d'injection de manière à réaliser un jet de faible impulsion ne pénétrant pas dans le bain de métal et de laitier.

7. Procédé selon l'une quelconque des revendications précédentes, **caractérisé en ce que** le catalyseur usé contient au moins l'une des associations métalliques suivantes : CoMo, NiMo, NiCoMo, NiMoV, NiMoWCo, FeCeMoK, NiW.

8. Procédé selon l'une quelconque des revendications précédentes, **caractérisé en ce que** le catalyseur usé contient en outre du vanadium.

9. Procédé selon la revendication précédente, **caractérisé en ce que** le laitier obtenu à l'étape c) est transféré dans un second four dans lequel il est traité pour en extraire le vanadium, de préférence un four de type convertisseur rotatif.

10. Procédé selon l'une quelconque des revendications précédentes, **caractérisé en ce que** le catalyseur usé introduit à l'étape b) est à l'état brut, et n'a subi aucun traitement préalable.

11. Procédé selon la revendication précédente, **caractérisé en ce que** le catalyseur contient des hydrocarbures, à une teneur comprise dans la gamme allant de 5% à 20% en poids, par rapport au poids total du catalyseur usé, de préférence de 10 à 20% en poids.

12. Procédé selon l'une quelconque des revendications 1 à 9, **caractérisé en ce que** le catalyseur usé introduit à l'étape b) est à l'état déshuilé sous l'action de la température et d'un flux de gaz de préférence choisi parmi l'azote, la vapeur d'eau et l'air.

13. Procédé selon la revendication précédente, **caractérisé en ce que** la teneur du catalyseur en hydrocarbures est comprise dans la gamme allant de 0,1% à 5% en poids, par rapport au poids total du catalyseur usé.

14. Procédé selon l'une quelconque des revendications précédentes, **caractérisé en ce que** le catalyseur usé contient du carbone fixe à une teneur comprise dans la gamme allant de 5% à 20% en poids, par rapport au poids total du catalyseur usé, de préférence de 10 à 20% en poids.

## Patentansprüche

1. Verfahren zur Verarbeitung eines verbrauchten Katalysators, der mindestens ein feuerfestes Mineraloxid und ein oder mehrere Metall oder Metalle enthält in Form von Sulfid(en), ausgewählt aus den folgenden Metallen: Molybdän, Nickel, Kobalt, Wolfram, Vanadium sowie Kohlenstoffverbindungen, wobei dieses Verfahren die folgenden aufeinanderfolgenden Schritte umfasst:
a) in einem Schmelzofen vom Typ rotierender Konverter, Vorbereiten einer Gusseisenschmelze im verflüssigten Zustand, die mit einer Schlackenschicht bedeckt ist; anschließend,
b) Einbringen des verbrauchten Katalysators in den Ofen, und ihn mit der Schlacke und der Gusseisenschmelze im verflüssigten Zustand in Kontakt bringen, dabei den Ofen in Rotation halten und ein oxidierendes Gas, das Sauerstoff enthält, in den Ofen einspritzen, über das Gemenge aus Katalysator, Schlacke und Gusseisen, um die Verbrennung der Kohlenstoff- und/oder Schwefelverbindungen zu bewirken, die bei Kontakt mit der Schlacke und dem flüssigen Gusseisen aus dem Katalysator austreten; anschließend,
c) Extrahieren, aus dem Ofen, durch sequentielles Abgießen, der in Schritt b) gebildeten Schlacke, um einerseits eine mit Metall oder Metallen angereicherte Gusseisenschmelze aus dem Ofen zurückzugewinnen und andererseits eine Schlacke zurückzugewinnen, die die Bestandteile des Katalysators enthält, die sich von den Metallen unterscheiden, mit Ausnahme von Vanadium, das, wenn der verbrauchte Katalysator Vanadium enthält, sich in der Schlacke befindet.

2. Verfahren nach dem vorhergehenden Anspruch, **dadurch gekennzeichnet, dass** das Gusseisenbad in Schritt a) auf eine Temperatur im Bereich von 1400°C bis 1650°C gebracht wird, und vorzugsweise von 1450°C bis 1550°C.

3. Verfahren nach einem der vorhergehenden Ansprüche, **dadurch gekennzeichnet, dass** auch die Materialien, die als "verflüssigt" bezeichnet werden, ausgewählt aus Kalk, Eisenoxid, Natriumcarbonat und Calciumfluorid, in Schritt b) in den Ofen eingebracht werden.

4. Verfahren nach einem der vorhergehenden Ansprüche, **dadurch gekennzeichnet, dass** auch ein Kohlenwasserstoff-Brenngas in Schritt b) in den Ofen eingespritzt wird.

5. Verfahren nach dem vorhergehenden Anspruch, **dadurch gekennzeichnet, dass** das Brenngas leichte Kohlenwasserstoffe umfasst, wie Kohlenwasserstoffe, die 1 bis 4 Kohlenstoffatome umfassen, und das Brenngas vorzugsweise Erdgas ist.

6. Verfahren nach einem der vorhergehenden Ansprüche, **dadurch gekennzeichnet, dass** die Einspritzung des oxidierenden Gases in Schritt b) mittels einem oder mehrerer Injektoren, deren Achse im Wesentlichen parallel zur Metall- und Schlackenschmelze ist, mit einem moderaten Einspritzdruck durchgeführt wird, um einen Strahl mit niedrigem Impuls zu erzeugen, der nicht in die Metall- und Schlackenschmelze eindringt.

7. Verfahren nach einem der vorhergehenden Ansprüche, **dadurch gekennzeichnet, dass** der verbrauchte Katalysator mindestens eine der folgenden metallischen Verbindungen enthält: CoMo, NiMo, NiCoMo, NiMoV, NiMoWCo, FeCeMoK, NiW.

8. Verfahren nach einem der vorhergehenden Ansprüche, **dadurch gekennzeichnet, dass** der verbrauchte Katalysator ferner Vanadium enthält.

9. Verfahren nach dem vorhergehenden Anspruch, **dadurch gekennzeichnet, dass** die in Schritt c) erhaltene Schlacke in einen zweiten Ofen überführt wird, wobei sie verarbeitet wird, um daraus Vanadium zu extrahieren, vorzugsweise in einem Ofen vom Typ rotierender Konverter.

10. Verfahren nach einem der vorhergehenden Ansprüche, **dadurch gekennzeichnet, dass** sich der in Schritt b) eingebrachte verbrauchte Katalysator im Rohzustand befindet und keiner vorgehenden Verarbeitung unterzogen wurde.

11. Verfahren nach dem vorhergehenden Anspruch, **dadurch gekennzeichnet, dass** der Katalysator Kohlenwasserstoffe enthält mit einem Gehalt im Bereich von 5 Gew.-% bis 20 Gew.-%, bezogen auf das Gesamtgewicht des verbrauchten Katalysators, vorzugsweise 10 bis 20 Gew.-%.

12. Verfahren nach einem der Ansprüche 1 bis 9, **dadurch gekennzeichnet, dass** sich der in Schritt b) eingebrachte verbrauchte Katalysator im entölten Zustand befindet, unter Einwirkung der Temperatur und einem Gasfluss, vorzugsweise ausgewählt aus Stickstoff, Wasserdampf und Luft.

13. Verfahren nach dem vorhergehenden Anspruch, **dadurch gekennzeichnet, dass** der Gehalt des Kohlenwasserstoffs im Katalysator im Bereich von 0,1 Gew.-% bis 5 Gew.-% liegt, bezogen auf das Gesamtgewicht des verbrauchten Katalysators.

14. Verfahren nach einem der vorhergehenden Ansprüche, **dadurch gekennzeichnet, dass** der verbrauchte Katalysator festen Kohlenstoff enthält mit einem Gehalt im Bereich von 5 Gew.-% bis 20 Gew.-%, bezogen auf das Gesamtgewicht des verbrauchten Katalysators, vorzugsweise 10 bis 20 Gew.-%.

## Claims

1. Method for treating a spent catalyst containing at least one refractory mineral oxide, one or more metals in the form of sulfide(s) chosen from the following metals: molybdenum, nickel, cobalt, tungsten, vanadium, as well as carbon compounds, this method comprising the following successive steps:
a) in a smelting furnace of the rotary converter type, preparing a melt of cast iron in the melted state above which there is a layer of slag; then
b) introducing into the furnace said spent catalyst and placing it in contact with the slag and the melt of cast iron in the melted state, while maintaining the furnace in rotation and while injecting an oxidizing gas containing oxygen into the furnace, above the mixture of catalyst, slag and cast iron, in such a way as to cause the combustion of the carbon and/or sulfur compounds which are released from the catalyst in contact with the slag and the liquid cast iron; then
c) extracting from the furnace by sequential castings the slag formed in step b) in such a way as to on the one hand recover in the furnace a cast iron melt enriched with metal or metals, and on the other hand recover a slag containing the components of the catalyst other than metals, with the exception of vanadium which, when the spent catalyst contains vanadium, ends up in the slag.

2. Method according to the previous claim, **characterized in that** the cast iron melt is brought in step a) to a temperature comprised in the range from 1400°C to 1650°C, and preferably from 1450°C to 1550°C.

3. Method according to any one of the previous claims, **characterized in that** materials called "fluxes" chosen from lime, iron oxide, sodium carbonate, and calcium fluoride are also introduced into the furnace during step b).

4. Method according to any one of the previous claims, **characterized in that** a hydrocarbon fuel gas is also injected into the furnace during step b).

5. Method according to the previous claim, **characterized in that** the fuel gas comprises light hydrocarbons, such as hydrocarbons comprising from 1 to 4 carbon atoms, and preferably the fuel gas is natural gas.

6. Method according to any one of the previous claims, **characterized in that** the injection of oxidizing gas is carried out in step b) via one or more injector(s), the axis of which is substantially parallel to the melt of metal and of slag, and with a moderate injection pressure in such a way as to create a low-thrust jet not penetrating the melt of metal and of slag.

7. Method according to any one of the previous claims, **characterized in that** the spent catalyst contains at least one of the following metal associations: CoMo, NiMo, NiCoMo, NiMoV, NiMoWCo, FeCeMoK, NiW.

8. Method according to any one of the previous claims, **characterized in that** the spent catalyst further contains vanadium.

9. Method according to the previous claim, **characterized in that** the slag obtained in step c) is transferred into a second furnace in which it is treated to extract the vanadium therefrom, preferably a furnace of the rotary converter type.

10. Method according to any one of the previous claims, **characterized in that** the spent catalyst introduced in step b) is in the raw state, and has not undergone any previous treatment.

11. Method according to the previous claim, **characterized in that** the catalyst contains hydrocarbons, at a concentration comprised in the range from 5% to 20% by weight, relative to the total weight of the spent catalyst, preferably from 10 to 20% by weight.

12. Method according to any one of claims 1 to 9, **characterized in that** the spent catalyst introduced in step b) is in a state deoiled under the action of the temperature and of a flow of gas preferably chosen from nitrogen, water vapor and air.

13. Method according to the previous claim, **characterized in that** the concentration of hydrocarbons in the catalyst is comprised in the range from 0.1% to 5% by weight, relative to the total weight of the spent catalyst.

14. Method according to any one of the previous claims, **characterized in that** the spent catalyst contains fixed carbon at a concentration comprised in the range from 5% to 20% by weight, relative to the total weight of the spent catalyst, preferably from 10 to 20% by weight.
